# EUROPÄISCHE PATENTSCHRIFT

(11) **EP 0 678 079 B1**
(45) Veröffentlichungstag und Bekanntmachung des Hinweises auf die Patenterteilung: **20.11.1996**
(21) Anmeldenummer: 94905028.0
(22) Anmeldetag: 11.01.1994
(51) Int. Cl.: B62D 5/083

(54) **ZENTRIEREINRICHTUNG, INSBESONDERE FÜR LENKVENTILE**
CENTRING DEVICE, ESPECIALLY FOR STEERING VALVES
DISPOSITIF DE CENTRAGE, NOTAMMENT POUR VANNES DE DIRECTION

(30) Priorität: 13.01.1993 DE 4300612
(43) Veröffentlichungstag der Anmeldung: 25.10.1995
(73) Patentinhaber: ZF FRIEDRICHSHAFEN Aktiengesellschaft, 88038 Friedrichshafen (DE)
(72) Erfinder: BREITWEG, Werner, D-73529 Schwäbisch Gmünd (DE); HOFMANN, Hans, D-73563 Mögglingen (DE)
(86) Internationale Anmeldenummer: EP9400058
(87) Internationale Veröffentlichungsnummer: WO9415825

(56) Entgegenhaltungen:
- EP-A- 0 468 659
- WO-A-94/00329
- FR-A- 2 496 583
- FR-A- 2 601 638
- GB-A- 2 044 697
- GB-A- 2 212 463

## Beschreibung

Die Erfindung bezieht sich auf ein Lenkventil, insbesondere für Kraftfahrzeuge, nach dem Oberbegriff des ersten Anspruches.

In derartigen Lenkgetrieben ist eine Antriebswelle vorgesehen, die durch einen mit beidseitigen Endstücken versehenen Drehstab mit einer Abtriebswelle verbunden ist. Die Antriebs- und die Abtriebswelle tragen miteinander zusammenwirkende Bauteile des Lenkventils, welches durch eine Relativverdrehung der Antriebswelle gegenüber der Abtriebswelle einen Druck in einem Servomotor ansteuert. Die Zentriereinrichtung ist zwischen den beiden Wellen angeordnet und weist gegen die Kraft eines Federelements an sich gegenüberliegenden Schrägflächen zweier Zentrierstücke auflaufende Wälzkörper auf.

Ein Lenkventil dieser Bauart (EP 0 244 449) enthält als Federelement einen Metallfaltenbalg. Der Metallfaltenbalg ist einerseits durch ein an der Antriebswelle befestigtes Endstück des Drehstabes und andererseits mit einem Zentrierstück verbunden. Das durch den Metallfaltenbalg axial gefederte Zentrierstück drückt über die Wälzkörper gegen ein weiteres an einem Endstück befestigtes Zentrierstück. Dieses Endstück verbindet den Drehstab mit der Abtriebswelle. Da die Wälzkörper in Schrägflächennuten abrollen, erhält man eine von der Relativdrehung der beiden Wellen abhängige Rückstellkraft, die sich zur Verdrehkraft des Drehstabes addiert. Eine so aufgebaute Zentriereinrichtung übernimmt die exakte Einstellung der beiden Wellen und damit auch des Lenkventils in der hydraulischen Mitte. Die bekannte Zentriereinrichtung eignet sich für Lenkventile in der Drehschieber- oder in der Drehkolbenbauweise und sichert ein einwandfreies Geradeausfahrtverhalten.

Der Erfindung liegt die Aufgabe zugrunde, eine Mittenzentriereinrichtung zu schaffen, die in der Kombination mit einem einteiligen oder einem dreiteiligen Drehstab noch weniger axialen Bauraum beansprucht.

Diese Aufgabe ist durch das im Anspruch 1 gekennzeichnete Lenkventil gelöst. Die Ansprüche 2 und 3 enthalten vorteilhafte Ausführungsformen.

Nach der Erfindung ist als Lenkventil ein Drehschieberventil vorgesehen, dessen Drehschieber sich über ein Nadellager auf dem mit der Abtriebswelle verbundenen Endstück des Drehstabes abstützt. An einen Innenlaufring des Nadellagers ist dabei ein Zentrierstück angeformt, das dem über das andere Endstück mit der Antriebswelle verbundenen Zentrierstück gegenüberliegt. Auf diese Weise kann man die auf dem abtriebsseitigen Endstück feste Innenlaufbüchse des Nadellagers gleichzeitig als Träger für das Zentrierstück nutzen, so daß sich die Baulänge für die Zentriereinrichtung verkürzt.

Nach Anspruch 2 schließen sich bei einem einteiligen Drehstab an dessen im Querschnitt reduzierten Torsionsbereich die mit der Antriebswelle und der Abtriebswelle verbundenen Endstücke an, wobei das Nadellager auf dem mit der Abtriebswelle befestigten Endstück sitzt.

Nach Anspruch 3 läßt sich die Baulänge bei Verwendung eines dreiteiligen Drehstabes noch weiter verkürzen. Ein dreiteiliger Drehstab hat zwei Endstücke, die sich hülsenartig bis in den Torsionsbereich des Drehstabes erstrecken. Das Nadellager sitzt in dieser Ausführung auf dem an die Antriebswelle angeschlossenen, hülsenartigen Endstück des Drehstabes, so daß für die Lagerung mit integriertem Zentrierstück und die anschließenden übrigen Bauteile der Zentriereinrichtung kein zusätzlicher axialer Einbauraum notwendig ist.

Ein Lenkventil in der Drehschieberbauweise, bei dem sich der Drehschieber über ein Nadellager auf dem abtriebsseitigen Fortsatz des Drehstabes abstützt, ist zwar bereits aus der EP 0 290 448 B1 bekannt. Mit einer Zentriereinrichtung, die für eine exakte Einstellung des Drehschieberventils in der hydraulischen Mitte sorgt, ist dieses Lenkventil jedoch nicht ausgerüstet.

Die Erfindung ist nachfolgend anhand von zwei in der Zeichnung dargestellten Ausführungsbeispielen näher erläutert. Es zeigen:
- Fig. 1: einen Längsschnitt durch ein Drehschieberventil mit einem einteiligen Drehstab;
- Fig. 2: eine Draufsicht in Richtung des Pfeiles II der Fig. 1;
- Fig. 2A: die Zentriereinrichtung entsprechend Fig. 2, jedoch in Arbeitsstellung und
- Fig. 3: ein Ausführungsbeispiel mit einem dreiteiligen Drehstab.

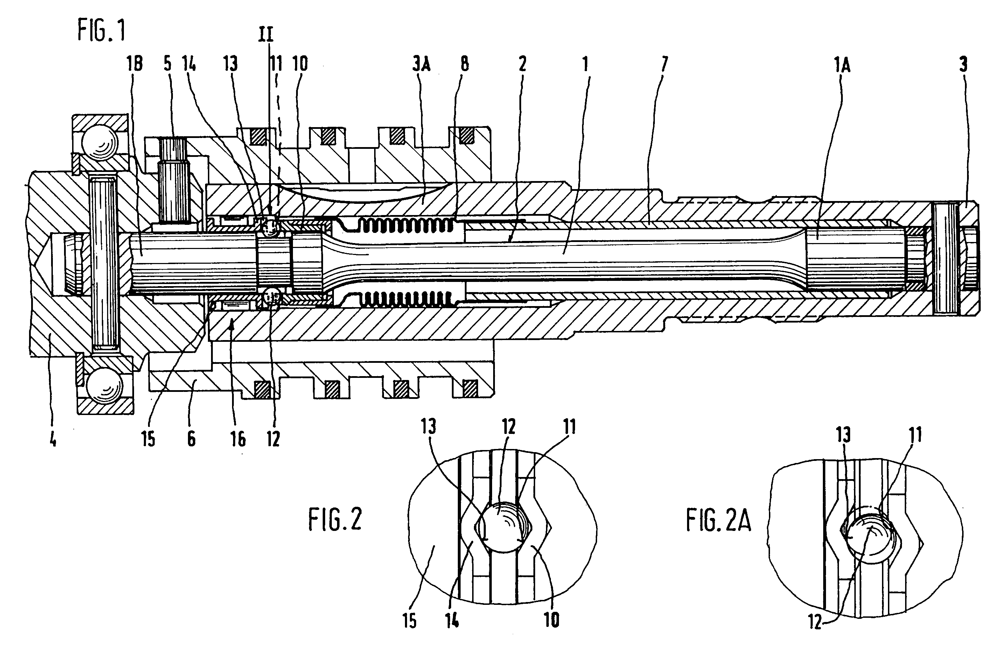

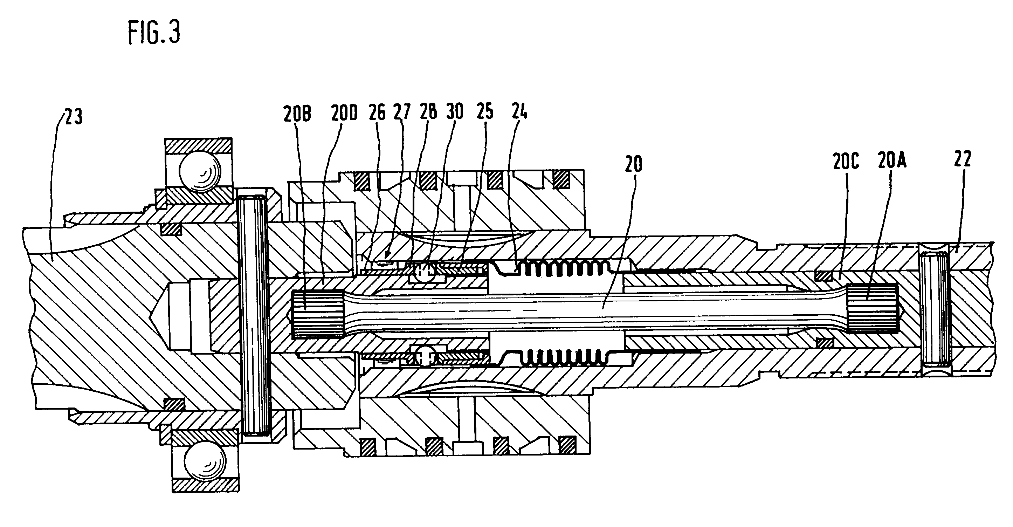

Die Zentriereinrichtung nach Fig. 1 weist einen einteiligen Drehstab 1 auf, an dessen im Querschnitt reduzierten Torsionsbereich 2 sich verdickte Endstücke 1A und 1B anschließen. Das Endstück 1A ist mit einer Antriebswelle 3 und das Endstück 1B mit der Abtriebswelle 4 verstiftet. Die Antriebswelle 3 trägt in ihrer Verlängerung einen Drehschieber 3A. An die Abtriebswelle 4 schließt sich eine mit dieser durch einen Stift 5 gekuppelte Ventilbuchse 6 an, in welcher der Drehschieber 3A eine Relativverdrehung zum Ansteuern eines Druckes ausführen kann. Der Drehschieber 3A und die Ventilbuchse 6 bilden in an sich bekannter Weise ein Drehschieberventil, das über ein Steuernutensystem einem nicht dargestellten Servomotor Drucköl zuleitet. Zur Zentriereinrichtung gehört ein an der Antriebswelle 3 befestigtes, rohrförmiges Endstück 7, das einen als Federelement dienenden Metallfaltenbalg 8 trägt. Am Metallfaltenbalg 8 ist in seiner axialen Verlängerung ein erstes Zentrierstück 10 befestigt. Das Zentrierstück 10 weist zwei sich diametral gegenüberliegende Schrägflächennuten 11 (Fig. 2 und 3) auf, in welchen Wälzkörper 12 abrollen. Die Wälzkörper 12 stützen sich unter der Belastung des Metallfaltenbalgs 8 in Schrägflächennuten 13 eines zweiten Zentrierstücks 14 ab, das nach der Erfindung zugleich als Innenlaufring 15 eines Nadellagers 16 ausgebildet ist. Die Wälzkörper 12 halten die Reibung zwischen den Schrägflächennuten 11 und 13 gering. Das Nadellager 16 ist auf das Endstück 1B des Drehstabes 1 aufgepreßt und sorgt für geringste Reibung und ein feinfühliges Ansprechen des Drehschieberventils 3A, 6 beim Drehen der Antriebswelle 3.

Die Fig. 2 zeigt die Zentriereinrichtung und damit auch das Drehschieberventil 3A, 6 in der Mitten- oder Neutralstellung. Die Fig. 2A zeigt dagegen die Verdrehstellung der Antriebswelle 3 gegenüber der Abtriebswelle 4. Dabei bewegen sich zwei einander gegenüberliegende Schrägfächen der Schrägflächennuten 11 und 13 aufeinander zu, wobei die Wälzkörper 12 aus ihrer Ruhelage (Fig. 2) auf den Schrägflächen hochlaufen (Fig. 2A). Der Metallfaltenbalg 8 wird dadurch noch stärker vorgespannt. Über die Schrägflächen läßt sich die axiale Rückstellkraft in eine Zentrierkraft umwandeln, die in Umfangsrichtung des Drehschiebers 3A und der Ventilbuchse 6 wirkt. Beim Loslassen eines mit der Antriebswelle 3 gekuppelten Lenkhandrades sichert diese Zentrierkraft die exakte Mittenstellung des Drehschieberventils 3A, 6.

Die Fig. 3 zeigt eine sogenannte Kurzbauweise eines Drehschieberventils mit einem Drehstab 20. Dieser trägt auf Stützbereiche 20A und 20B aufgeknetete Endstücke 20C und 20D in der Form hülsenförmiger Fortsätze. Ein solcher Drehstab besteht daher aus drei Bauteilen. Das Endstück 20C ist mit einer Antriebswelle 22 und das Endstück 20D mit einer Abtriebswelle 23 verstiftet. Das Endstück 20C trägt wiederum einen Metallfaltenbalg 24 und dieser ein erstes Zentrierstück 25. Entsprechend der Ausführung nach Fig. 1 bildet ein Innenlaufring 26 eines Nadellagers 27 wieder eine Baueinheit mit einem zweiten Zentrierstück 28, wobei zwischen Schrägflächennuten Wälzkörper 30 abrollen. Die Besonderheit dieser Ausführung besteht darin, daß der Innenlaufring 26 auf dem Endstück 20D des Drehstabes 20 aufgepreßt ist. Das Nadellager 27 ist hier über den Torsionsbereich des Drehstabes gerückt, so daß sich die Kurzbauweise beibehalten läßt.

### Bezugszeichen

- 1: Drehstab
- 1A: Endstück
- 1B: Endstück
- 2: Torsionsbereich
- 3: Antriebswelle
- 3A: Drehschieber
- 4: Abtriebswelle
- 5: Stift
- 6: Ventilbuchse
- 7: Endstück
- 8: Metallfaltenbalg
- 9: -
- 10: Zentrierstück
- 11: Schrägflächennuten
- 12: Wälzkörper
- 13: Schrägflächennuten
- 14: Zentrierstück
- 15: Innenlaufring
- 16: Nadellager
- 20: Drehstab
- 20A: Stützbereich
- 20B: Stützbereich
- 20C: Endstück
- 20D: Endstück
- 22: Antriebswelle
- 23: Abtriebswelle
- 24: Metallfaltenbalg
- 25: Zentrierstück
- 26: Innenlaufring
- 27: Nadellager
- 28: Zentrierstück
- 29: -
- 30: Wälzkörper

## Patentansprüche

1. Lenkventil, insbesondere für Kraftfahrzeuge, mit folgenden Merkmalen:
- ein Drehstab (1) verbindet mit beidseitigen Endstücken (1A, 1B) eine Antriebswelle (3) mit einer Abtriebswelle (4);
- die Antriebs- und die Abtriebswelle tragen miteinander zusammenwirkende Bauteile des Lenkventils;
- eine Zentriereinrichtung ist zwischen den beiden Wellen angeordnet und besteht aus einem gegen die Kraft eines Federelements (8) an sich gegenüberliegenden Schrägflächen zweier Zentrierstücke (10, 14) auflaufenden Wälzkörpern (12);
- das erste Zentrierstück (10) ist durch ein rohrförmiges Endstück (7) mit der Antriebswelle (3) verbunden,
**gekennzeichnet** durch folgende Merkmale:
- als Lenkventil ist ein in einer Ventilbuchse (6) relativ verstellbarer Drehschieber (3A) vorgesehen;
- der Drehschieber (3A) stützt sich über ein Nadellager (16, 27) auf dem mit der Abtriebswelle (4) verbundenen Endstück (1B; 20D) des Drehstabes ab und
- das zweite Zentrierstück (14, 28) ist mit einem Innenlaufring (15, 26) des Nadellagers (16, 27) einstückig ausgeführt.

2. Lenkventil nach Anspruch 1, **gekennzeichnet** durch folgende Merkmale:
- der Drehstab (2) ist einteilig ausgeführt, an dessen im Querschnitt reduzierten Torsionsbereich sich die mit der Antriebswelle (3) und der Abtriebswelle (4) verbundenen Endstücke (1A; 1B) anschließen und
- das Nadellager (16) sitzt auf dem mit der Abtriebswelle (4) befestigten Endstück (1B).

3. Lenkventil nach Anspruch 1, **gekennzeichnet** durch folgende Merkmale:
- die beiden Endstücke (20C, 20D) des Drehstabes sind als hülsenförmige Fortsätze ausgeführt und
- das Nadellager (27) sitzt auf dem mit der Abtriebswelle (23) verbundenen hülsenförmigen Endstück (20D).

## Claims

1. Steering valve, in particular for vehicles, having the following features:
- a torsion bar (1) with end pieces (1A, 1B) at either end connects a drive shaft (3) to an output shaft (4);
- the drive shaft and the output shaft carry cooperating components of the steering valve;
- a centring device is disposed between the two shafts and comprises a [sic] rolling bodies (12) which, counter to the action of a spring element (8), run up against opposing oblique surfaces of two centring pieces (10, 14);
- the first centring piece (10) is connected by a tubular end piece (7) to the drive shaft (3),
characterized by the following features:
- a rotary slide (3A) which is relatively adjustable in a valve bush (6) is provided as a steering valve;
- the rotary slide (3A) is supported by a needle roller bearing (16, 27) on the end piece (1B; 20D) of the torsion bar connected to the output shaft (4) and
- the second centring piece (14, 28) is integrally constructed with an inner raceway (15, 26) of the needle roller bearing (16, 27).

2. Steering valve according to claim 1, characterized by the following features:
- the torsion bar (2) is a single-piece construction having a torsional region of reduced cross section, which is adjoined by the end pieces (1A; 1B) connected to the drive shaft (3) and the output shaft (4) and
- the needle roller bearing (16) is seated on the end piece (1B) fastened to the output shaft (4).

3. Steering valve according to claim 1, characterized by the following features:
- the two end pieces (20C, 20D) of the torsion bar take the form of sleeve-like extensions and
- the needle roller bearing (27) is seated on the sleeve-like end piece (20D) connected to the output shaft (23).

## Revendications

1. Soupape de direction, notamment pour un véhicule automobile, comportant les caractéristiques suivantes :
- un axe de direction (1) qui accouple par ses deux extrémités opposées (1A, 1B) un arbre d'entraînement (3) avec un arbre entraîné (4);
- l'arbre d'entraînement et l'arbre entraîné portent des pièces constitutives de la soupape de direction qui coopèrent entre elles ;
- un dispositif de centrage est monté entre les deux arbres et consiste en rouleaux cylindriques (12), roulant contre des surfaces inclinées de deux pièces de centrage (10, 14) en s'opposant à la force d'un élément ressort (8) ;
- la première pièce de centrage (10) est couplée à l'arbre d'entraînement (3) par une pièce d'extrémité (7) de forme tubulaire ;
**caractérisée en ce que**
- la soupape de direction consiste en un tiroir rotatif (3A) relativement ajustable logé dans une boîte de soupape (6) ;
- le tiroir rotatif (3A) s'appuie par un roulement à aiguilles (16, 27) sur la pièce d'extrémité (1B; 20D) de l'axe de direction, liée à l'arbre entraîné (4), et
- la deuxième pièce de centrage (14, 28) est construite d'une pièce avec une bague de roulement intérieure (15, 26) du roulement à aiguilles (16, 27).

2. Soupape de direction selon la revendication 1, **caractérisée** par les caractéristiques suivantes :
- l'axe de direction (1) est réalisé d'une pièce et comporte une zone de torsion (2) de section réduite à laquelle sont raccordées les pièces d'extrémités (1A; 1B) couplées à l'arbre d'entraînement (3) et à l'arbre entraîné (4).
- le roulement à aiguilles (16) est disposé sur la pièce d'extrémité (1B) couplée à l'arbre entraîné (4).

3. Soupape de direction selon la revendication 1, **caractérisée** par les caractéristiques suivantes :
- les deux pièces d'extrémités (20C, 20D) de l'axe de direction sont constituées par des prolongements tubulaires, et
- le roulement à aiguilles (27) est disposé sur la pièce d'extrémité tubulaire (20D) couplée à l'arbre entraîné (23).
